# EUROPEAN PATENT SPECIFICATION

(11) **EP 4 157 685 B1**
(45) Date of publication and mention of the grant of the patent: **10.07.2024**
(21) Application number: 21726688.1
(22) Date of filing: 26.05.2021
(51) Int. Cl.: B60T 11/21

(54) **IMPROVED BOOSTED BRAKE CONTROL HYDRAULIC ARRANGEMENT FOR WORK VEHICLES**
VERBESSERTE VERSTÄRKTE BREMSSTEUEREINRICHTUNG FÜR ARBEITSFAHRZEUGE
AGENCEMENT AMÉLIORÉ DE CONTRÔLE RENFORCÉ DE FREINS D'UN VÉHICULE DE TRAVAIL

(30) Priority: 26.05.2020 IT 202000012430
(43) Date of publication of application: 05.04.2023
(73) Proprietor: CNH Industrial Italia S.p.A., 10156 Torino (IT)
(72) Inventor: CIARROCCHI, Marco, Pietro, 64027 Sant'Omero (TE) (IT); PASINI, Gianpaolo, 41100 Modena (IT)
(74) Representative: CNH Industrial IP Department
(86) International application number: PCT/EP2021/063981
(87) International publication number: WO 2021/239779

(56) References cited:
- EP-A1- 3 604 056
- WO-A1-2016/139182
- WO-A1-2020/007685
- US-A1- 2012 298 231
- US-A1- 2020 047 738

## Description

### TECHNICAL FIELD

The present invention concerns a brake control hydraulic arrangement, in particular a boosted brake control hydraulic arrangement for master brake cylinders of work vehicles, such as agricultural vehicles.

### BACKGROUND OF THE INVENTION

All vehicles are provided with brakes and, as known, work vehicles such as agricultural vehicles are provided with main brakes on rear wheels of the vehicle that can be actuated hydraulically e.g. thanks to dedicated master brake cylinders and further, optional, brakes on front wheels of the vehicles that can be actuated hydraulically thanks to the same master brake cylinders.

WO2016/139182A1 dicloses an example of such hydraulic arrangement.

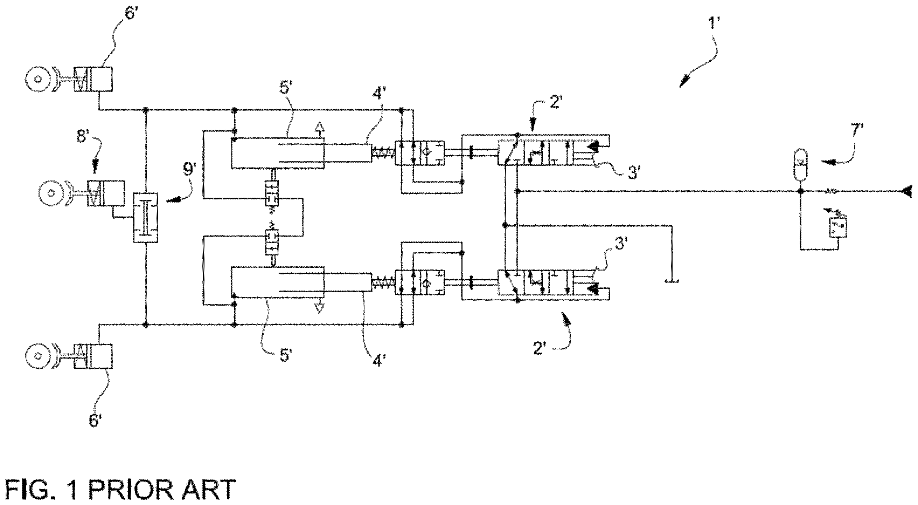

Figure 1 discloses an exemplarily embodiment of rear brakes control hydraulic arrangement 1' as known in the art. Briefly, such arrangement 1' comprises a brake actuation valve 2' configured to be actuated by a respective pedal 3' by the user of the work vehicle. Such brake actuation valve 2' is configured to move a piston 4' making part of a master brake cylinder 5' which consequently push a high pressure fluid into a respective brake 6'.

In order to facilitate the pushing operation of the pedal 3' by the user of the work vehicle, it is known to hydraulically connect a source of fluid in pressure 7' to the servo-brake actuation valve 2' so that the greater is the pushing on the pedal 3', the greater fluid in pressure helps the movement of the brake actuation valve 2' to actuate the master brake cylinder 5'.

It is noted that the fluid coming from master brake cylinder 5' is also used for controlling front brakes 8' of the work vehicle thanks to an "AND" valve 9' fluidly interposed in parallel between the lines coming from master brake cylinder 5' and directed to rear brakes 6'.

The above synthetically defined arrangement is known as boosted master brake cylinder configuration and it is widely used in work vehicles to assist the operator when braking the vehicle.

However, it is clear that the above configuration needs to have master brake cylinders normally dimensioned to have enough fluid volume to actuate rear brakes but also front brakes when they are provided. This result in criticality manage the different configuration with same master cylinder volume.

Accordingly, master braked cylinders of a hydraulic arrangement as the one disclosed in figure 1 needs to be over dimensioned and may lead to problems when the same master braked cylinders of a hydraulic arrangement is used in vehicles with or without front brakes, that is not present in all vehicles.

Therefore, the need is felt to provide a hydraulic arrangement configured to allow the activation of rear and front brakes of a work vehicle in a cost effective, compact and lighter way, with the opportunity to have in the same time a potential second line of braking (secondary brake)

An aim of the present invention is to satisfy the above mentioned needs in an economic and optimized way.

### SUMMARY OF THE INVENTION

The aforementioned aim is reached by a hydraulic arrangement and a work vehicle as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a schematic representation of a hydraulic arrangement as known in the prior art;
- Figure 2 is a schematic representation of an embodiment of a hydraulic arrangement according to the present invention.

### DETAILED DESCRIPTION OF THE INVENTION

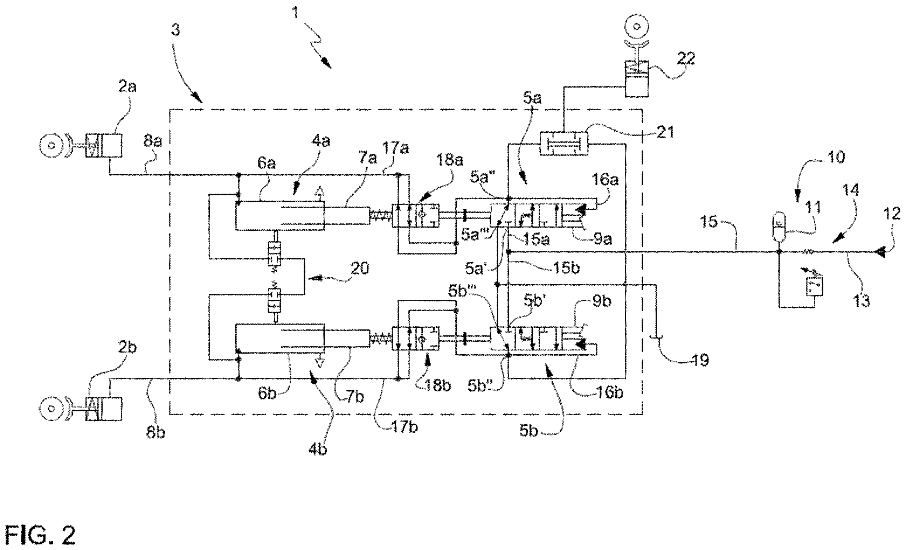

In figure 2 reference number, 1 generically discloses a hydraulic arrangement according to the present invention and configured to control the actuation of rear brakes 2a, 2b of a work vehicle, not shown. In particular, the hydraulic arrangement 1 is configured to control a rear left brake 2a and a rear right brake 2b of the work vehicle.

Hydraulic arrangement 1 comprises a master brake cylinder module 3 comprising a master brake cylinder 4a, 4b for each of the rear brake 2a, 2b and a respective actuation valve 5a, 5b for each of such master brake cylinders 4a, 4b.

In the following, since the disclosed exemplarily master brake cylinder module 3 comprises the same elements for left rear brake 2a and right rear brake 2b, only the elements for operating the left rear brake 2a will be described, assuming the index "a" together the reference number. The same elements with index "b" are present for operating the right rear brake 2b.

The master brake cylinder 4a comprises a housing 6a and a piston 7a configured to slide inside the housing 6a that is further configured to house fluid in pressure. The housing 6a is fluidly connected via a conduit 8a to the left rear brake 2a. Indeed a motion of the piston 7a inside the housing 6a tends to push away through conduit 8a the fluid in pressure thereby activating the left rear brake 2a.

The piston 7a is mechanically connected to actuation valve 5a so that its motion corresponds to a motion of actuation valve 5a. This latter is actuated by a pedal 9a so that the user, by pushing the pedal 9a, can move the actuation valve 5a thereby inserting the piston 7a into the housing 6a.

In order to provide the aforementioned boost function to actuation valve 5a, hydraulic arrangement 1 further comprises a source 10 of fluid in pressure fluidly connected to valve 5a. It should be noted that in the disclosed embodiment the source 10 comprises a single accumulator 11 but it's clear that the source may be separated for each left and right rear brake 2a, 2b or may be provided with a different and more complex hydraulic arrangement.

The accumulator 11 is fluidly connected to a source of fluid in pressure 12 of the work vehicle, e.g. a pump, via a conduit 13 into which it is interposed a check valve 14 to avoid contrary passage of fluid from circuit 1 to the source 12.

As said, the source 10 is fluidly connected to a first port 5a' of actuation valve 5a via a conduit 15; indeed it's separated then into two branches 15a, 15b to be connected to each actuation valve 5a, 5b.

Moreover, a second port 5a*"* actuation valve 5a is fluidly connected via a conduit 16a to allow a hydraulic signal to exert a hydraulic pressure, in parallel to mechanical pedal 9a. Such hydraulic signal is selectively connected by connecting the second port 5a*"* to the first port 5a' of actuation valve 5a, as described below. In particular. As clearly shown, the hydraulic signal can vary from zero in a first position of the actuation valve 5a to a maximum value in a further position of the actuation valve 5a proportionally at the pedal load applied.

Furthermore, second port 5a'', i.e. conduit 16a, may further be fluidly connected to output conduit 8a of housing 6a of master bake cylinder 4a via a related conduit 17a. In particular and preferably, the hydraulic arrangement 1 comprises an intermediate valve 18a rigidly carried by actuation valve 5a configured to allow the passage of fluid between the actuation valve 5a and the housing 16a in both directions or to allow the passage of such fluid in only one direction, e.g. from actuation valve 5a to housing 16.

More preferably, the conduit 17a comprises a central portion into which is divided into two branches and the intermediate valve 18a is fluidly interposed between such branches. Accordingly, such intermediate valve 18a is a two-position four ways valve.

Furthermore, actuation valve 5a further defines a third port 5a‴ fluidly connected to discharge 19. According to the above-defined structure, actuation valve 5a is a three ways proportional valve. In particular actuation valve 5a can assume at least a first position into which the second port 5a*"* is connected to its third port 5a‴ and a second position into which the second port 5a*"* is fluidly connected to the first port 5a'.

As per se known, hydraulic arrangement 1 further comprises pressure balancing means 20 fluidly interposed between the housings 6a of the master cylinders 4a, 4b and here not described in detail for sake of brevity.

According to the invention, the hydraulic arrangement 1 comprises an *"*AND*"* valve 21, e.g. a shuttle valve, fluidly interposed in parallel between the third ports 5a‴, 5b‴ of each actuation valve 5.

Such shuttle valve 21 is configured to allow the passage of the hydraulic flow towards front brakes 22 only if both the ones coming from ports 5a‴, 5b‴ are coming to shuttle valve 21. Therefore, shuttle valve 21 acts as an *"*AND*"* logic valve in order to actuate the front brakes 22.

The operation of the above-described embodiment according to the invention is the following.

When the user of the work vehicle presses the related pedal 9a, 9b it starts the compression of piston 7a, 7b into housing 6a, 6b and then the passage of fluid towards brakes 2a, 2b. During the compression, a portion of the fluid from housing is sent to the conduit 16a, 16b to generate the hydraulic signal which exerts a pressure in parallel to the pedal 9a, 9b; furthermore, the passage of fluid from first port 5a‴, 5b‴′ to discharge 19 and via conduits 17a, 17b is more and more restricted while the it is fluidly connected to source 10 via conduit 15a, 15b so that also the fluid in pressure coming from conduit 15 strength the hydraulic signal acting in parallel to pedal 9a, 9b. In this way, the pressure needed on pedal 9a, 9b is lower because the pressure coming from the hydraulic signal in conduit 16a helps the user while pressing pedal 9a, 9b.

Accordingly, conduits 17a, 17b are isolated and second port 5a*"*, 5b*"* is sent to shuttle valve 21. Here, if both hydraulic signals come from the left or right sides of the master cylinder module 3, then a common hydraulic signal is sent to the front brakes 22, thereby activating these latter. Such activation may be more or less delayed in function of the brake design.

When the user stops to push on the pedal 9a, 9b, the force of fluid in pressure in housing 6a, 6b push away the piston 7a, 7b thereby restoring the initial fluid connections of first port 5a', 5b' and third port 5a‴, 5b‴. In particular, pedals 9a, 9b may be provided with retaining elastic means configured to recall pedals in this rest position.

In such way, since third port 5a‴ is connected to discharge it is closed the passage with the source of fluid 10, any possible residual fluid present into conduit 17a, 17b, 16, 16b or shuttle valve 21 are discharged to discharge 19 so that all front and related rear brakes 2a, 2b, 22 are totally unbraked.

In view of the foregoing, the advantages of a hydraulic arrangement 1 according to the invention are apparent.

In particular the proposed hydraulic arrangement 1 can be used for different typologies of vehicle already comprising booster master brake cylinder modules for controlling rear brakes with minimal modifications.

Indeed, the addition of front brakes 22 to rear brakes 2a, 2b does not modify the pedal stroke needed to activate rear brakes 2a, 2b.

Accordingly, all work vehicles can be equipped with smaller master brake cylinders 4a, 4b irrespectively from the fact they comprise, or not, front brakes, thereby reducing the cost for manufacturing such work vehicles. Indeed, the fluid used for actuating the front brakes comes from the source of fluid in pressure and not from master cylinders whose fluid is only used for rear brakes.

It is clear that modifications can be made to the described hydraulic arrangement 1 which do not extend beyond the scope of protection defined by the claims.

For example, as said in the description, the master bake cylinder module 3, the actuation valve 5, the source of fluid in pressure 10, the intermediate valve 18 or the shuttle valve 21 can be of any typology suitable to accomplish their operation as claimed.

## Claims

1. Hydraulic arrangement (1) for controlling front and rear brakes (22; 2a, 2b) of a work vehicle comprising a master brake cylinder module (3) and a source (10; 12) of fluid in pressure, said master brake cylinder module (3) comprising: a right and a left master cylinders (4a,4b),
- at least a master cylinder (4a, 4b) is fluidly connected to rear brakes (2a, 2b);
- an actuation valve (5a, 5b) for each of said right and left master cylinders (4a, 4b), said actuation valve (5a, 5b) controlling the fluid flow sent from said right and left master cylinders (4a, 4b) to said brakes (2a, 2b) in function of a force exerted on a pedal (9a, 9b);
each actuation valve (5a, 5b) comprises a first port (5a', 5b'), a second port (5a*"*, 5b*"*) and a third port (5a‴, 5b‴), the first port being fluidly connected to said source (10; 12), the second port (5a*"*, 5b*"*) being fluidly connected to said actuation valve (5a, 5b) to exert a pressure on said actuation valve (5a, 5b) in addition to the force exerted on said pedal (9a, 9b), the third port (5a‴, 5b‴) being fluidly connected to a discharge (19),
each actuation valve (5a, 5b) being configured to pass between a first position into which said first port (5a', 5b') is fluidly connected to said third port (5a‴, 5b‴) and said second port (5a*"*, 5b*"*) is closed and a second position into which said first port (5a', 5b') is fluidly connected to said second port (5a*"*, 5b*"*) and said third port (5a‴, 5b‴) is closed, said hydraulic arrangement (1) further comprising an *"*AND*"* valve (21) fluidly interposed between said second ports (5a*"*, 5b*"*) of said actuation valves (5a, 5b) and said front brakes (22).

2. Hydraulic arrangement according to claim 1, wherein said "AND" valve (21) is a shuttle valve.

3. Hydraulic arrangement according to claim 1 or 2, further comprising an intermediate valve (18a, 18b) for each of said actuation valve (5a, 5b) and fluidly interposed between conduits (16a, 16b) fluidly connecting said second port (5a*"*,5b*"*) to said actuation valve (5a, 5b) and conduits (8a, 8b) each one fluidly connecting one of the master cylinders (4a, 4b) to said brakes (2a, 2b), said intermediate valve (18a, 18b) being configured to allow the passage of fluid in both direction between said conduits (8a, 8b; 16a, 16b) or to allow the passage of fluid only from said actuation valve (5a, 5b) towards the rear brakes (2a, 2b).

4. Hydraulic arrangement according to claim 1 or 2, wherein the right master cylinder (4a) and left master cylinder (4b) are fluidly connected by a respective conduit (8a, 8b) to a respective rear brake (2a, 2b).

5. Work vehicle comprising rear brakes (2a, 2b) and front brakes (22) for braking said work vehicle, a source (12) of fluid in pressure and a hydraulic arrangement (1) according to any of the preceding claims for controlling said front and rear brakes (22; 2a, 2b) .

## Patentansprüche

1. Hydraulische Anordnung (1) zum Steuern vorderer und hinterer Bremsen (22; 2a, 2b) eines Nutzfahrzeugs mit einem Hauptbremszylindermodul (3) und einer Quelle (10; 12) von mit Druck beaufschlagtem Fluid, wobei das Hauptbremszylindermodul (3) umfasst:
- einen rechten und einen linken Hauptzylinder (4a, 4b),
- wobei mindestens ein Hauptzylinder (4a, 4b) mit den hinteren Bremsen (2a, 2b) fluidisch verbunden ist;
- ein Betätigungsventil (5a, 5b) für jeden aus rechtem und linkem Hauptzylinder (4a, 4b), wobei das Betätigungsventil (5a, 5b) den Fluidfluss steuert, der von dem rechten und linken Hauptzylinder (4a, 4b) zu den Bremsen (2a, 2b) in Abhängigkeit von einer Kraft geleitet wird, die auf ein Pedal (9a, 9b) wirkt;
wobei jedes Betätigungsventil (5a, 5b) einen ersten Anschluss (5a', 5b'), einen zweiten Anschluss (5a", 5b") und einen dritten Anschluss (5a‴, 5b‴) umfasst,
wobei der erste Anschluss mit der Quelle (10; 12) fluidisch verbunden ist,
wobei der zweite Anschluss (5a", 5b") mit dem Betätigungsventil (5a, 5b) fluidisch verbunden ist, um zusätzlich zu der Kraft, die auf das Pedal (9a, 9b) wirkt, einen Druck auf das Betätigungsventil (5a, 5b) auszuüben,
wobei der dritte Anschluss (5a‴, 5b‴) mit einem Auslass (19) fluidisch verbunden ist,
wobei jedes Betätigungsventil (5a, 5b) dazu eingerichtet ist, zwischen einer ersten Position, in der der erste Anschluss (5a', 5b') mit dem dritten Anschluss (5a‴, 5b‴) fluidisch verbunden ist und der zweite Anschluss (5a", 5b") geschlossen ist, und einer zweiten Position, in der der erste Anschluss (5a', 5b') mit dem zweiten Anschluss (5a", 5b") verbunden ist und der dritte Anschluss (5a‴, 5b‴) geschlossen ist, zu wechseln,
wobei die hydraulische Anordnung (1) des Weiteren ein "UND"-Ventil (21) umfasst, das zwischen den zweiten Anschlüssen (5a", 5b") der Betätigungsventile (5a, 5b) und den vorderen Bremsen (22) angeordnet ist.

2. Hydraulische Anordnung nach Anspruch 1, wobei das "UND"-Ventil (21) ein Wechselventil ist.

3. Hydraulische Anordnung nach Anspruch 1 oder 2, des Weiteren umfassend ein mittleres Ventil (18a, 18b) für jedes Betätigungsventil (5a, 5b), das zwischen Leitungen (16a, 16b), die den zweiten Anschluss (5a", 5b") mit dem Betätigungsventil (5a, 5b) fluidisch verbinden, und Leitungen (8a, 8b), die jeweils einen der Hauptzylinder (4a, 4b) mit den Bremsen (2a, 2b) fluidisch verbinden, fluidisch angeordnet ist,
wobei das mittlere Ventil (18a, 18b) dazu eingerichtet ist, den Durchgang von Fluid in beide Richtungen zwischen den Leitungen (8a, 8b; 16a, 16b) zu ermöglichen oder den Durchgang von Fluid nur von dem Betätigungsventil (5a, 5b) zu den hinteren Bremsen (2a, 2b) zu ermöglichen.

4. Hydraulische Anordnung nach Anspruch 1 oder 2, wobei der rechte Hauptzylinder (4a) und linke Hauptzylinder (4b) mittels einer entsprechenden Leitung (8a, 8b) mit einer entsprechenden hinteren Bremse (2a, 2b) fluidisch verbunden sind.

5. Nutzfahrzeug mit hinteren Bremsen (2a, 2b) und vorderen Bremsen (22) zum Bremsen des Nutzfahrzeugs, einer Quelle (12) von mit Druck beaufschlagtem Fluid und einer hydraulischen Anordnung (1) nach einem der vorhergehenden Ansprüche zum Steuern der vorderen und hinteren Bremsen (22; 2a, 2b).

## Revendications

1. Dispositif hydraulique (1) permettant de commander les freins avant et arrière (22 ; 2a, 2b) d'un véhicule de travail comprenant un module de maîtres-cylindres de frein (3) et une source (10 ; 12) de fluide sous pression, ledit module de maîtres-cylindres de frein (3) comprenant : un maître-cylindre droit et un maître-cylindre gauche (4a, 4b),
- au moins un maître-cylindre (4a, 4b) est raccordé fluidiquement aux freins arrière (2a, 2b) ;
- une valve de commande (5a, 5b) pour chacun desdits maîtres-cylindres droit et gauche (4a, 4b), ladite valve de commande (5a, 5b) contrôlant le débit de fluide circulant desdits maîtres-cylindres droit et gauche (4a, 4b) vers lesdits freins (2a, 2b) en fonction d'une force exercée sur une pédale (9a, 9b) ;
chaque valve de commande (5a, 5b) comprend un premier orifice (5a', 5b'), un deuxième orifice (5a", 5b") et un troisième orifice (5a‴, 5b‴), le premier l'orifice étant raccordé fluidiquement à ladite source (10 ; 12), le deuxième orifice (5a", 5b") étant raccordé fluidiquement à ladite valve de commande (5a, 5b) pour exercer une pression sur ladite valve de commande (5a, 5b) en plus de la force exercée sur ladite pédale (9a, 9b), le troisième port (5a‴, 5b‴) étant raccordé fluidiquement à une évacuation (19),
chaque valve de commande (5a, 5b) étant configurée pour passer d'une première position dans laquelle ledit premier orifice (5a', 5b') est raccordé fluidiquement audit troisième orifice (5a‴, 5b‴) et ledit deuxième orifice (5a", 5b") est fermé, à une seconde position dans laquelle ledit premier orifice (5a', 5b') est raccordé fluidiquement audit deuxième orifice (5a", 5b") et ledit troisième orifice (5a‴, 5b‴) est fermé, ledit dispositif hydraulique (1) comprenant en outre une valve à fonction « ET » (21) interposée fluidiquement entre lesdits deuxièmes orifices (5a", 5b") desdites valves de commande (5a, 5b) et lesdits freins avant (22).

2. Dispositif hydraulique selon la revendication 1, dans lequel ladite valve à fonction « ET » (21) est un clapet double.

3. Dispositif hydraulique selon la revendication 1 ou la revendication 2, comprenant en outre une valve intermédiaire (18a, 18b) pour chacune desdites valves de commande (5a, 5b) et interposée fluidiquement entre des conduits (16a, 16b) raccordant fluidiquement ledit deuxième orifice (5a", 5b") à ladite valve intermédiaire (5a, 5b) et auxdits conduits (8a, 8b), chacun raccordant fluidiquement l'un des maîtres-cylindres (4a, 4b) auxdits freins (2a, 2b), ladite valve intermédiaire (18a, 18b) étant configurée pour permettre le passage de fluide dans les deux sens entre lesdits conduits (8a, 8b; 16a, 16b) ou pour permettre le passage de fluide uniquement de ladite valve de commande (5a, 5b) vers les freins arrière (2a, 2b).

4. Dispositif hydraulique selon la revendication 1 ou la revendication 2, dans laquelle le maître-cylindre droit (4a) et le maître-cylindre gauche (4b) sont raccordés fluidiquement par un conduit respectif (8a, 8b) à un frein arrière respectif (2a, 2b).

5. Véhicule de travail comprenant des freins arrière (2a, 2b) et des freins avant (22) pour freiner ledit véhicule de travail, une source (12) de fluide sous pression et un dispositif hydraulique (1) selon l'une quelconque des revendications précédentes pour commander lesdits freins avant et arrière (22 ; 2a, 2b).
